# EUROPÄISCHE PATENTSCHRIFT

(11) **EP 3 152 486 B1**
(45) Veröffentlichungstag und Bekanntmachung des Hinweises auf die Patenterteilung: **23.02.2022**
(21) Anmeldenummer: 15726163.7
(22) Anmeldetag: 03.06.2015
(51) Int. Cl.: F22B 1/00, F24C 15/00, G01F 23/26

(54) **VERDAMPFER**
EVAPORATOR
ÉVAPORATEUR

(30) Priorität: 05.06.2014 DE 102014210670
(43) Veröffentlichungstag der Anmeldung: 12.04.2017
(73) Patentinhaber: BSH Hausgeräte GmbH, 81739 München (DE)
(72) Erfinder: LEGO, Dieter, 76137 Karlsruhe (DE); NAGEL, Martin, 67580 Forstheim (FR); WAGNER, Benjamin, US/28562 New Bern (DE)
(86) Internationale Anmeldenummer: PCT/EP2015/062323
(87) Internationale Veröffentlichungsnummer: WO 2015/185589

(56) Entgegenhaltungen:
- EP-A2- 1 870 641
- WO-A1-2013/045572
- US-A- 3 916 926

## Beschreibung

Die Erfindung betrifft einen Verdampfer für ein Haushalts-Speisenbehandlungsgerät, aufweisend einen Aufnahmeraum für zu verdampfende Flüssigkeit mit einer elektrischen Heizung und einen Füllstandssensor zum Bestimmen eines Füllstands der Flüssigkeit in dem Aufnahmeraum. Die Erfindung betrifft ferner ein Haushalts-Speisenbehandlungsgerät mit einem solchen Verdampfer. Die Erfindung ist insbesondere vorteilhaft anwendbar auf Gargeräte, und zwar als Einzelgeräte oder als Kombinationsgeräte.

DE 10 2007 001 175 A1 offenbart ein Verfahren und eine Vorrichtung zur Füllstandsmessung aggressiver Medien in einem Tank, insbesondere einer Urea-Lösung zur Abgasnachbehandlung bei einer Verbrennungskraftmaschine. Um ein preiswertes sowie zuverlässig arbeitendes Verfahren zur Füllstandsmessung aggressiver Medien und eine entsprechende Vorrichtung zu schaffen, wird vorgeschlagen, dass die Vorrichtung eine Einrichtung zur kapazitiven Füllstandsmessung aufweist, die zur Messung des Flüssigkeitsstands durch eine Wand eines jeweiligen Tanks hindurch ausgebildet und mit einer Auswerteschaltung verbunden ist.

DE 10 2008 035 635 A1 offenbart eine Vorrichtung zur kapazitiven Messung eines Füllstands oder eines Pegels eines Mediums mit einem langgestreckten Sensor zum Erzeugen eines elektrischen Feldes. Dazu weist der Sensor wenigstens zwei langgestreckte Elektroden auf, die zur Anordnung außerhalb des Mediums vorgesehen und zur Erzeugung eines elektrischen Feldes geeignet sind, das wenigstens abschnittsweise das Medium durchquert. Eine Verwendung ist z. B. zur Füllstandsmessung in Kunststoffbehältern denkbar.

EP 2 400 275 A1 offenbart eine Vorrichtung zur nicht-invasiven kapazitiven Füllstandsmessung eines Füllmediums in einem Behälter, besagte Vorrichtung aufweisend a) mindestens zwei Messelektroden, die in unterschiedlichen horizontalen Ebenen angeordnet sind und eine Messfläche mit vertikaler Ausdehnung definieren, und b) mindestens eine Referenzelektrode, die eine Referenzfläche mit vertikaler Ausdehnung definiert, wobei jede Messelektrode zusammen mit der Referenzelektrode jeweils einen Kondensator ausbildet, wodurch jeweils ein elektrisches Feld ausbildbar ist, wobei die vertikale Ausdehnung der Referenzfläche mindestens der vertikalen Ausdehnung der Messfläche entspricht.

EP 1 870 641 A2 offenbart einen Dampfgarer als Verdampfereinrichtung mit einem Verdampfer für Wasser, wobei der Verdampfer einen beheizbaren Wasserbehälter und einen Füllstandssensor aufweist, gemäß dem Stand der Technik.

Es ist die **Aufgabe** der vorliegenden Erfindung, die Nachteile des Standes der Technik zumindest teilweise zu überwinden und insbesondere einen einfach aufgebauten und wartungsarmen Verdampfer eines Dampfbehandlungsgeräts bereitzustellen, insbesondere für Haushalts-Speisenbehandlungsgerät, insbesondere für Gargeräte.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch einen Verdampfer für ein Haushalts-Speisenbehandlungsgerät, aufweisend einen Aufnahmeraum für zu verdampfende Flüssigkeit mit einer elektrischen Heizung zum Erhitzen der Flüssigkeit und einen Füllstandssensor zum Bestimmen eines Füllstands der Flüssigkeit in dem Aufnahmeraum, wobei der Füllstandssensor ein berührungslos arbeitender, ein elektromagnetisches (d.h., ein elektrisches und/oder magnetisches) Feld in dem Aufnahmeraum erzeugender Sensor ist, der an einer Außenseite einer den Aufnahmeraum begrenzenden Gehäusewand angeordnet ist und wobei an dem Füllstandssensor ein Temperatursensor angeordnet ist.

Es hat sich überraschenderweise gezeigt, dass sich mittels des berührungslos arbeitenden Füllstandssensors auch der Füllstand einer siedenden oder nahezu siedenden Flüssigkeit mit einer bewegten Oberfläche, wie sie typischerweise in einem Verdampfer vorkommt, ausreichend genau bestimmen lässt. Es ergibt sich der Vorteil, dass der Füllstandssensor nicht direkt mit der erhitzten Flüssigkeit in Berührung kommt und somit besonders langlebig ist. Insbesondere wird der außenseitig angeordnete Füllstandssensor keiner Korrosion durch die heiße Flüssigkeit ausgesetzt. Auch kann der Füllstandssensor nicht verkalken, was eine Langzeitstabilität der Messung verbessert. Darüber hinaus gibt es keine Probleme bei einer Abdichtung des Füllstandssensors gegenüber dem Aufnahmeraum. Ein solcher Füllstandssensor braucht weder gereinigt, z.B. entkalkt, zu werden und in der Regel auch nicht ausgetauscht zu werden.

Der Aufnahmeraum für zu verdampfende Flüssigkeit mag auch als Verdampferraum oder Dampferzeugungskammer bezeichnet werden. Er ist mit Flüssigkeit, insbesondere Wasser, befüllbar und weist dazu mindestens eine Flüssigkeitseintritts- oder Flüssigkeitszuführöffnung auf. Er weist ferner mindestens eine Dampfauslassöffnung zum Auslassen des mit seiner Hilfe aus der Flüssigkeit erzeugten Dampfs auf. Der Aufnahmeraum mag auch von Flüssigkeit entleert werden. Dazu mag er eine eigenständige Entleerungsöffnung aufweisen, oder die Flüssigkeit wird durch die gleiche Öffnung zugeführt und abgelassen bzw. entleert werden. Der Aufnahmeraum wird vorzugsweise mit Frischwasser befüllt, während ggf. entleerte Flüssigkeit beispielsweise als Abwasser angesehen werden kann.

Es ist eine Ausgestaltung, dass der Füllstandssensor ein kapazitiver Sensor ist. Dieser ermöglicht eine besonders genaue Füllstandsmessung, und zwar auch bei einer kochenden Flüssigkeit mit geringem Füllstand, z.B. im Bereich nur einiger Millimeter. Der Füllstandssensor erzeugt ein elektrisches Feld. Dazu mag der kapazitive Füllstandssensor beispielsweise ein oder mehrere Messelektroden und mindestens eine Masseelektrode aufweisen. Der kapazitive Füllstandssensor mag z.B. analog zu DE 10 2007 001 175 A1, DE 10 2008 035 635 A1 oder EP 2 400 275 A1 ausgebildet sein.

Es ist noch eine Ausgestaltung, dass, der Füllstandssensor ein induktiver Sensor ist. Der Füllstandssensor erzeugt ein magnetisches Feld, insbesondere ein magnetisches Wechselfeld. Dazu mag der induktive Füllstandssensor beispielsweise ein oder mehrere Spulen oder Antennen aufweisen. Die Wirkweise induktiver Füllstandssensoren ist grundsätzlich bekannt und braucht hier nicht weiter ausgeführt zu werden.

Es ist eine Weiterbildung, dass die Gehäusewand, an welcher der Füllstandssensor angeordnet ist, eine Seitenwand des Gehäuses, insbesondere eine vertikal stehende Seitenwand, ist. Insbesondere ein kapazitiver Füllstandssensor mag dann an einem Bereich des Gehäuses angeordnet sein, welcher im normalen Betrieb des Verdampfers innenseitig zumindest teilweise durch die Flüssigkeit benetzbar ist. So wird ein besonders starkes Messsignal ermöglicht. Dieser Bereich des Gehäuses liegt insbesondere zumindest teilweise tiefer als ein maximaler Füllstand der Flüssigkeit in dem Gehäuse.

Es ist eine Weiterbildung, dass die Gehäusewand eine Decke oder deckenseitige Wand des Gehäuses ist, insbesondere zur Anordnung eines induktiven Füllstandssensors.

Für eine genaue Füllstandsmessung weist das Material der Gehäusewand vorzugsweise eine geringe Permittivität auf. Das Material der Gehäusewand zumindest im Bereich des Füllstandssensors mag dazu insbesondere ein nichtmetallisches Material sein, z.B. Kunststoff.

Der Füllstandssensor mag insbesondere eine elektronische Schaltung zu seinem Betrieb aufweisen. Der Füllstandssensor mag z.B. eine integrierte Schaltung wie einen Mikroprozessor, einen Mikrocontroller, einen ASIC, ein FPGA usw. umfassen. Insbesondere mögen ein oder mehrere Messelemente (Elektroden, Antennen usw.) an der der Gehäusewand zugewandten Seite einer Leiterplatte oder Platine angeordnet sein, während die elektronische Schaltung an der der Gehäusewand abgewandten Seite der Platine angeordnet ist.

Es ist auch noch eine Ausgestaltung, dass die elektrische Heizung eine Flächenheizung ist, welche einen Boden des Aufnahmeraums darstellt. Die Flächenheizung ergibt den Vorteil, dass die in dem Aufnahmeraum befindliche Flüssigkeit zur Dampferzeugung auf einfache Weise großflächig und damit besonders schnell erhitzbar ist. Ein Füllstand der Flüssigkeit in dem Aufnahmeraum mag nur gering sein, z.B. im Bereich von Millimetern, z.B. zwischen acht und zehn Millimetern, z.B. von neun Millimetern, was eine schnelle Aufheizung weiter unterstützt und eine flache Bauweise ermöglicht. Die Flächenheizung bildet also vorzugsweise eine bodenseitige Wand des Aufnahmeraums. Sie wird im Folgenden auch als "bodenseitige Flächenheizung" bezeichnet.

Es ist noch eine Ausgestaltung, dass die Flächenheizung mindestens eine unbeheizte Zone aufweist und der Füllstandssensor an der unbeheizten Zone angeordnet ist. Dadurch wird das durch den Füllstandssensor abgefühlte Flüssigkeitsvolumen in der Nähe der Gehäusewand durch die Flächenheizung nicht direkt aufgewühlt. Insbesondere wird eine Blasenbildung oberhalb der unbeheizten Zone unterdrückt. Dies verbessert eine Messgenauigkeit. Dass der Füllstandssensor an der unbeheizten Zone angeordnet ist, mag insbesondere bedeuten, dass der Bereich der Gehäusewand (insbesondere Seitenwand), an welchem der Füllstandsensor angeordnet ist, angrenzend an die unbeheizte Zone angeordnet ist oder benachbart zu der unbeheizten Zone angeordnet ist oder angrenzend an einen beruhigten Bereich der Flüssigkeit oder benachbart zu einem beruhigten Bereich der Flüssigkeit angeordnet ist.

Es ist noch eine Weiterbildung, dass die unbeheizte Zone einem Randbereich, insbesondere Eckbereich, der Flächenheizung entspricht. Dies erleichtert z.B. eine kapazitive Füllstandsmessung, bei der dann praktisch nur ein oberhalb der unbeheizten Zone befindlicher beruhigter Bereich der Flüssigkeit abgefühlt wird.

Es ist eine weitere Ausgestaltung, dass mindestens eine Wand (im Folgenden ohne Beschränkung der Allgemeinheit als "Trennwand" bezeichnet) in ein durch die Flüssigkeit füllbares Volumen oberhalb der unbeheizten Zone der Flächenheizung reicht. Die mindestens eine Trennwand ist also an einer Innenseite des Gehäuses ausgebildet. Dadurch wird eine Übertragung einer Bewegung der Oberfläche der Flüssigkeit oberhalb einer beheizten Zone in den Bereich der Flüssigkeit oberhalb der unbeheizten Zone bei eingeschalteter Flächenheizung unterdrückt. Die Flüssigkeit oberhalb der unbeheizten Zone bzw. in dem beruhigten Bereich ist daher weniger aufgewühlt, was eine Messgenauigkeit noch weiter verbessert.

Die mindestens eine Trennwand ist insbesondere eine vertikale Wand. Die Trennwand braucht nicht an einer Grenze zwischen der unbeheizten Zone und einer beheizten Zone der Flächenheizung angeordnet zu sein, sondern mag beispielsweise oberhalb der unbeheizten Zone mit einem seitlichen Abstand von der beheizten Zone angeordnet sein. Dies verringert einen möglichen Übertritt von stark aufgewühlter Flüssigkeit in dem beruhigten Bereich der Flüssigkeit oberhalb der unbeheizten Zone.

Es ist noch eine weitere Ausgestaltung, dass mindestens eine Trennwand ausgehend von einer Decke des Verdampfers in das durch die Flüssigkeit füllbare Volumen oberhalb der unbeheizten Zone der Flächenheizung reicht. Dies erlaubt eine besonders einfache Herstellung.

Zusätzlich oder alternativ mag mindestens eine Trennwand von einer Seitenwand des Gehäuses ausgehen.

Die mindestens eine Trennwand mag oberhalb eines maximalen Füllstands zumindest teilweise offen oder geschlossen sein.

Es ist ferner eine Ausgestaltung, dass mittels der mindestens einen Trennwand eine oberhalb der unbeheizten Zone befindliche, zumindest bodenseitig offene Kammer gebildet wird, welche mit dem restlichen Aufnahmeraum (der mindestens eine beheizte Zone aufweist) fluidisch kommunizierend ausgebildet ist. Dadurch wird eine Oberflächenbewegung der Flüssigkeit besonders effektiv unterdrückt. Durch die so vorhandene, insbesondere einen Abstand zu der Flächenheizung wahrende, Öffnung kann die Flüssigkeit ausreichend schnell zwischen diesen beiden Bereichen ausgetauscht werden, um eine zeitnahe Füllstandsmessung zu erlauben. Die Öffnung mag insbesondere als ein Spalt zwischen der mindestens einen Trennwand und der bodenseitigen Flächenheizung ausgebildet sein.

Es ist zudem eine Weiterbildung, dass ein Dampfauslass bzw. die Dampfauslassöffnung oberhalb der unbeheizten Zone angeordnet ist. Dies ergibt den Vorteil, dass keine kleinen Wassertropfen mit dem Dampfstrom mitgerissen werden, welche sich hingegen typischerweise an dem aufgewühlten Wasser über der beheizten Zone bilden. Dadurch erhöht sich eine Dampfqualität. Je weniger Wassertröpfchen im Dampfstrom enthalten sind, desto höher ist sein Energiegehalt und somit die Effizienz. Zudem wird verhindert, dass das Gargut bzw. Speise in dem Speisenbehandlungsraum durch die Wassertröpfchen beschädigt wird.

Es ist außerdem eine Ausgestaltung, dass der Verdampfer ein Gehäuse mit einem Bodenteil und einem Deckelteil aufweist und der Aufnahmeraum durch das Deckelteil und die Flächenheizung gebildet wird. Dies ermöglicht eine einfache Montage und Wartung des Verdampfers. Der Füllstandssensor mag insbesondere an einer Außenseite des Deckels angeordnet sein. Die mindestens eine Trennwand mag insbesondere an einer Innenseite des Deckels vorhanden sein, z.B. an einer Seitenwand und/oder an einer Decke oder Deckenwand.

Es ist ein Merkmal der Erfindung, dass an dem Füllstandssensor ein Temperatursensor angeordnet ist. Dies ermöglicht auf kompakte Weise eine Temperaurmessung des Füllstandssensors und/oder der Flüssigkeit. Der Temperatursensor mag beispielsweise an einer dem Gehäuse abgewandten Seite des Füllstandssensors angeordnet sein oder an einer dem Gehäuse zugewandten Seite des Füllstandssensors (also zwischen Füllstandssensor und Gehäuse). Die Anordnung an der von dem Gehäuse abgewandten Seite des Füllstandssensors vermeidet eine Abschattung des von dem Füllstandssensor durch das Gehäuse abgestrahlten elektromagnetischen Felds bzw. der elektromagnetischen Signale und/oder einen einfachen Aufbau. Die Anordnung an der dem Gehäuse zugewandten Seite des Füllstandssensors ermöglicht ein schnelleres Ansprechen des Temperatursensors und eine genauere Temperaturmessung.

Der Temperatursensor mag beispielsweise ein NTC sein. Falls der Füllstandssensor mittels einer Platine ausgebildet ist, kann der Temperatursensor beispielsweise an dieser Platine angeordnet sein. Dadurch kann die elektronische Schaltung die Messsignale des Temperatursensors direkt bei einer Auswertung und/oder sogar bei einer Ansteuerung der Messelemente berücksichtigen.

Es ist zudem eine Ausgestaltung, dass der Temperatursensor mit einer Auswerteeinrichtung zum Auswerten der Sensorsignale des Füllstandssensors verbunden ist. Dadurch können beispielsweise bei einer Signalauswertung temperaturabhängige Bauteileigenschaften des Füllstandssensors und/oder eine Temperaturabhängigkeit der Permittivität der Flüssigkeit berücksichtigt und zumindest teilweise kompensiert werden.

Es ist noch eine Ausgestaltung, dass der Temperatursensor mit einer Temperatureinstelleinrichtung zum Einstellen einer Temperatur der Flüssigkeit und/oder der Flächenheizung verbunden ist. Die Temperatureinstelleinrichtung mag beispielsweise einen Heizstrom durch die Flächenheizung einstellen. Diese Ausgestaltung ermöglicht eine Einstellung und/oder Regelung einer Temperatur der Flüssigkeit in dem Verdampfer, beispielsweise zur Durchführung eines Entkalkungsvorgangs. Der Temperatursensor kann beispielsweise für die Einstellung oder Regelung der Temperatur einer Entkalkungsflüssigkeit verwendet werden. Der Entkalker entfaltet bei einer höheren Temperatur eine bessere/schnellere Reinigungswirkung. Die Temperatur sollte aber auch nicht zu hoch werden, da dies dazu führen kann, dass der Entkalker keine Wirkung mehr zeigt.

Es ist auch eine Weiterbildung, dass die Flächenheizung eine den Aufnahmeraum begrenzende Trägerplatte aufweist, an deren dem Aufnahmeraum abgewandten Rückseite mindestens eine Heizleiterbahn angeordnet ist. Diese Weiterbildung ist kompakt und robust umsetzbar. Die Trägerplatte mag insbesondere aus Metall bestehen, z.B. einem Eisenmetall, z.B. aus nichtrostendem Stahl. Die Trägerplatte mag z.B. ein Blechteil sein.

Insbesondere bei einer Ausbildung der Trägerplatte aus elektrisch leitfähigem Material mag diese auch als eine Elektrode, z.B. als eine Massenelektrode, eines kapazitiven Füllstandssensors dienen.

Die Trägerplatte mag zumindest im nicht geheizten Zustand des Verdampfers eine ebene Platte sein. Die Trägerplatte mag an ihrer dem Aufnahmeraum zugewandten Vorderseite beispielsweise blank oder verzundert sein. Die Trägerplatte mag alternativ z.B. aus Keramik bestehen.

Die Trägerplatte weist zur Erreichung einer besonders geringen thermischen Trägheit und damit hohen Energieausbeute bei gleichzeitig guter Wärmespreizfähigkeit und hoher Robustheit eine Dicke zwischen einem und zwei Millimetern auf, ist jedoch nicht darauf beschränkt.

Die mindestens eine Heizleiterbahn mag beispielsweise eine Dünnschicht-Heizleiterbahn oder eine Dickschicht-Heizleiterbahn sein und als elektrisches Widerstandsheizelement dienen. Speziell eine Dickschicht-Heizleiterbahn lässt sich besonders einfach, kostengünstig und in hoher Qualität herstellen und ist immer noch sehr platzsparend. Die mindestens eine Heizleiterbahn mag insbesondere bei einer elektrisch leitfähigen Trägerplatte über eine elektrische Isolierungsschicht an der Trägerplatte befestigt sein, um einen Kurzschluss zu verhindern. Die Flächenheizung mag an ihrer dem Aufnahmeraum abgewandten Rückseite von einer Deckschicht belegt sein, z.B. als Schutz gegen eine mechanische Beanspruchung. Es ist eine Weiterbildung, dass die Flächenheizung eine Dicke zwischen einem und zwei Millimetern aufweist. Es ist außerdem eine Weiterbildung, dass die Flächenheizung mehrere unabhängig voneinander betreibbare flächige Heizleiterbahnen aufweist. So lässt sich auf einfache Weise (z.B. mit einem konstanten Heizstrom und/oder mit einer festen Taktung des Heizstroms) eine besonders genaue Abstufung der eingebrachten Heizleistung erreichen. Es ist auch noch eine Weiterbildung, dass zumindest zwei der Heizleiterbahnen eine unterschiedliche Nennleistung oder eine unterschiedliche Maximalleistung aufweisen. So lässt sich eine besonders genaue Abstufung der eingebrachten Heizleistung mit einer geringen Zahl von Heizleiterbahnen erreichen.

Es ist noch eine Weiterbildung, dass der Verdampfer eine Dichtung aufweist, welche an der Seitenkante aufliegt. Insbesondere die konvexe Seitenkante bildet auf besonders einfach umsetzbare Weise insbesondere zusammen mit dem Gehäuse einen Aufnahmebereich oder Haltebereich für die Dichtung. Die Dichtung mag entlang der Seitenkante der Flächenheizung verlegt sein. Die Dichtung mag eine einem O-Ring ähnliche Querschnittsform und Materialzusammensetzung aufweisen, aber z.B. in Draufsicht von einer Kreisringform abweichen. Die Art der Dichtung ist jedoch grundsätzlich nicht beschränkt, sondern mag beispielsweise auch als eine Flachdichtung ausgebildet sein. Es ist allgemein eine Weiterbildung, dass die Dichtung mittels der Seitenkante gespannt wird, was deren korrekten Sitz auch unter thermischer Verformung der Flächenheizung sicherstellt. Die Dichtung mag insbesondere mittels des Gehäuses und der Seitenkante gehalten werden. Es ist noch eine Weiterbildung, dass die Dichtung eine Doppeldichtung mit zwei übereinander angeordneten Dichtungselementen ist, welche oberseitig bzw. unterseitig an der Seitenkante aufliegen. So lässt sich eine besonders sichere Dichtung erreichen.

Es ist auch noch eine Ausgestaltung, dass das Haushaltsgerät ein Gargerät ist.

Die Aufgabe wird auch gelöst durch ein Haushaltsgerät, insbesondere Gargerät, mit einem Verdampfer wie oben beschrieben. Das Haushaltsgerät mag ein alleinstehendes Gerät sein oder mag ein Kombinationsgerät sein. Das Haushaltsgerät ist insbesondere ein Haushaltsgerät im Sinne von "weißer Ware".

Das erfindungsgemäße Haushaltsgerät ist ein Speisenbehandlungsgerät. Das Haushaltsgerät weist dazu einen mit Dampf aus dem Verdampfer befüllbaren Speisenbehandlungsraum auf. Das Speisenbehandlungsgerät mag z.B. ein Ofen mit einer Dampfgarfunktionalität sein. Ein solcher Ofen mag ein Einzelgerät oder eine Ofen/Kochfeld-Kombination (Herd) sein. Der Ofen mag insbesondere ein Backofen mit einer Dampfbehandlungsfunktion sein. Außer in einem Speisenbehandlungsgerät mag der Verdampfer beispielsweise auch in Bügeleisen, Kaffeemaschinen, Reinigungsgeräten oder Waschmaschinen eingesetzt werden.

Der Verdampfer mag in dem Speisenbehandlungsraum untergebracht sein, z.B. wandseitig oder bodenseitig, oder mag außerhalb des Speisenbehandlungsraums untergebracht sein.

Es ist auch eine Weiterbildung, dass das Haushaltsgerät eine Befülleinrichtung zum Befüllen des Verdampfers und/oder eine Entleereinrichtung zum Entleeren des Verdampfers aufweist. Dies ermöglicht eine besonders präzise Dosierung von Flüssigkeit bzw. eine effektive Entleerung des Aufnahmeraums.

Es ist noch eine Weiterbildung, dass die Befülleinrichtung und die Entleereinrichtung unterschiedliche Funktionseinheiten sind. Dadurch können die Fördereigenschaften besonders präzise auf den jeweiligen Zweck abgestimmt werden. So ist es auch eine Ausgestaltung, dass die Befülleinrichtung und die Entleereinrichtung jeweilige Pumpen aufweisen oder sind.

Es ist noch eine Weiterbildung, dass die Befülleinrichtung und die Entleereinrichtung fluidisch voneinander getrennt sind und dazu insbesondere an fluidisch voneinander getrennte Fluidzuleitungen angeschlossen sind. So kann beispielsweise eine Trennung eines Frischwasserbereichs von einem Abwasserbereich erreicht werden.

Alternativ mag eine Befülleinrichtung und Entleereinrichtung als eine einzige kombinierte Befüll- und Entleereinrichtung umgesetzt sein, z.B. mit oder als eine einzige Pumpe. Das Befüllen und Entleeren kann dann durch entsprechendes Stellen eines oder mehrerer Ventile eines zumindest abschnittsweise zusammenhängenden Leitungssystems für die Flüssigkeit erreicht werden.

Das Haushaltsgerät mag einen Überhitzungsdetektor zum Feststellen einer Überhitzung der Heizung aufweisen. Es ist eine Weiterbildung, dass die Flächenheizung als der Überhitzungsdetektor dient. Beispielsweise mag die Flächenheizung eine temperaturabhängig elektrisch leitfähige Schicht aufweisen. Dann kann eine Temperatur der Flächenheizung und folglich eine Überhitzung durch Feststellen einer Leitfähigkeit oder entsprechenden elektrischen Größe bestimmt werden, z.B. durch Vergleich mit einem vorbestimmten Schwellwert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Explosionsdarstellung in Schrägansicht einen erfindungsgemäßen Verdampfer;
- Fig.2: zeigt als Schnittdarstellung in Seitenansicht ein Haushaltsgerät mit dem Verdampfer; und
- Fig.3: zeigt als Schnittdarstellung in Seitenansicht einen Ausschnitt aus dem zusammengebauten Verdampfer.

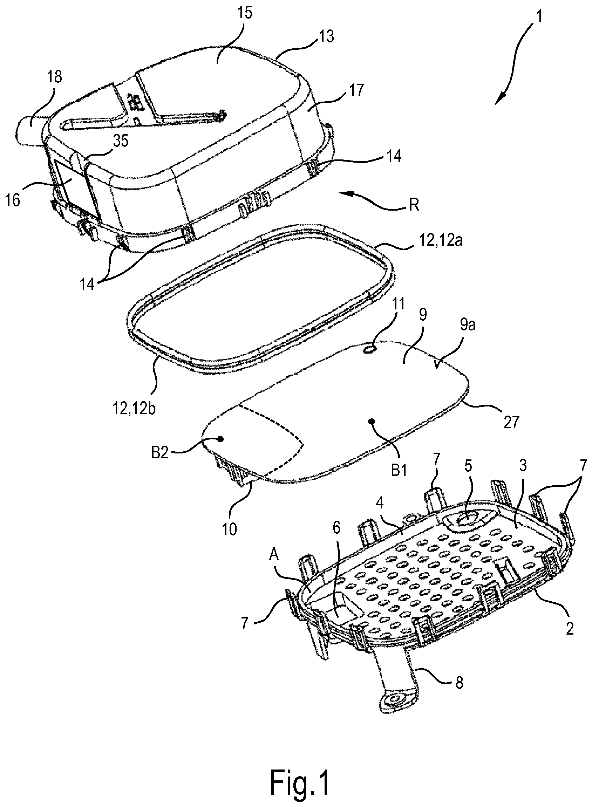

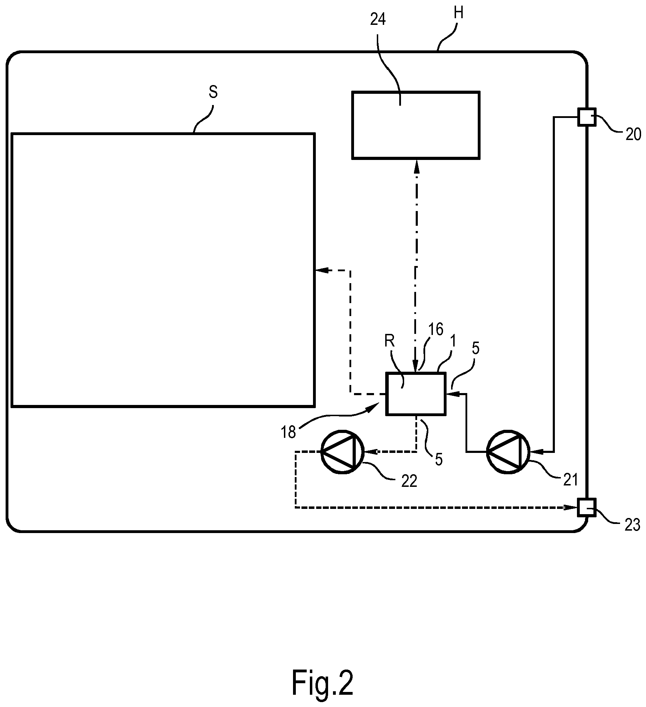

**Fig.1** zeigt als Explosionsdarstellung in Schrägansicht einen Verdampfer 1, welcher z.B. zur Verwendung in einem Haushalts-Dampfgargerät H (siehe Fig.2) vorgesehen ist, z.B. in einem eigenständigen Dampfgarer oder einem Backofen mit Dampfgarfunktion.

Der Verdampfer 1 weist ein Bodenteil 2 mit einem bodenseitigen Bereich 3 und einem daran anschließenden, vorderseitig vorstehenden umlaufenden Rand 4 auf. Der bodenseitige Bereich 3 weist hier beispielsweise eine ebene Grundform mit einer rechteckigen Außenkontur A mit abgerundeten Kanten auf. In dem bodenseitigen Bereich 3 befinden sich mindestens zwei Öffnungen, hier umfassend eine Wasserdurchlassöffnung 5 und eine Durchführungsöffnung 6 zum Durchführen eines elektrischen Anschlusses. Von dem Rand 4 stehen mehrere federnde Rastlaschen 7 nach oben hoch. Zudem geht in rückwärtige Richtung mindestens eine Befestigungslasche 8 ab, beispielsweise zur Verschraubung mit dem Haushalts-Dampfgargerät H.

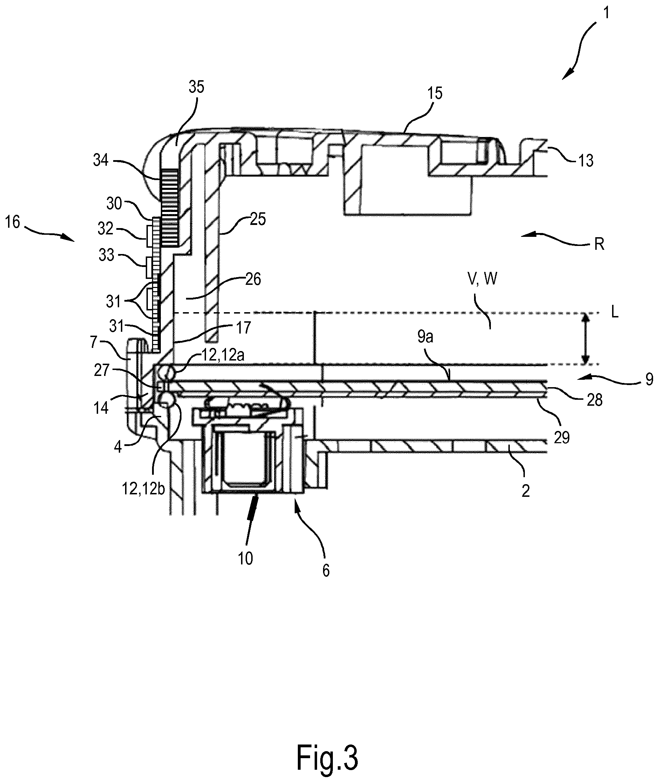

Der bodenseitige Bereich 3 ist innenseitig ganzflächig und dicht von einer elektrisch betriebenen Flächenheizung 9 abgedeckt. Die Flächenheizung 9 weist an ihrer Rückseite einen elektrischen Anschluss 10 auf, welcher durch die Durchführungsöffnung 6 ragt. Die Flächenheizung 9 weist ferner ein Loch 11 auf, das deckungsgleich zu der Wasserdurchlassöffnung 5 liegt. Durch das Loch 11 und die Wasserdurchlassöffnung 5 kann Wasser W (siehe auch Fig.3) eingefüllt und abgelassen werden.

Die Flächenheizung 9 ist flächig erwärmbar und mag dazu beispielsweise eine der Flüssigkeit zugewandte elektrisch leitfähige Vorderseite 9a aufweisen. Die Flächenheizung 9 kann zudem eine (z.B. innenliegende) Schicht aufweisen, welche bei Überschreiten einer vorbestimmten Grenztemperatur elektrisch leitend wird (o. Abb.). Eine starke Änderung der elektrischen Leitfähigkeit bzw. des elektrischen Widerstands oder eines durch diese Schicht leitbaren Stroms deutet dabei auf ein Erreichen der Grenztemperatur hin und damit auch auf einen Eintritt eines Überhitzungsfalls. Die Grenztemperatur mag z.B. bei ca. 200 °C liegen. Die Flächenheizung 9 dient also optional gleichzeitig als Überhitzungsdetektor zum Feststellen ihrer Überhitzung.

Die Flächenheizung 9 weist in Draufsicht auf ihre Vorderseite 9a eine nicht-eckige Außenkontur auf, nämlich diejenige eines Rechtecks mit kreisförmig abgerundeten Ecken. Eine schmale Seitenkante 27 der Flächenheizung 9 verläuft umlaufend oder geschlossen entlang dieser Außenkontur.

Die Flächenheizung 9 weist einen beheizbaren oder beheizten Teilbereich bzw. eine beheizte Zone B1 und einen unbeheizten Teilbereich bzw. eine unbeheizte Zone B2 auf. Während an der beheizten Zone B1 beispielsweise mindestens ein Heizleiter (z.B. mäanderförmig) verlegt ist, fehlt dieser an der unbeheizten Zone B2. Insbesondere mag das Wasser W dadurch an der beheizten Zone B1 stark aufgewühlt werden, ggf. sogar kochen, während das Wasser W bzw. dessen freie Oberfläche an der unbeheizten Zone B2 vergleichsweise ruhiger bleibt. Die unbeheizte Zone B2 nimmt hier einen Eckbereich der Flächenheizung 9 ein.

Die Flächenheizung 9 und der Deckel 13 bilden zusammengesetzt einen Aufnahmeraum R für das Wasser W. Die Flächenheizung 9 bildet dabei einen Boden bzw. eine bodenseitige Wand des Aufnahmeraums R.

Auf dem Bodenteil 2 sitzt über eine umlaufende Dichtung 12 ein gewölbtes oder schalenförmiges Deckelteil 13 auf. Das Deckelteil 13 weist außenseitig mehrere Rastnasen 14 auf, welche zum Eingriff mit den Rastlaschen 7 vorgesehen sind und eine einfache Rastverbindung zwischen dem Bodenteil 2 und dem Deckelteil 13 erlauben.

An einer Seitenwand des Deckelteils 13 ist außenseitig ein kapazitiver Füllstandssensor 16 zum Bestimmen eines Füllstands L (siehe auch Fig.3) angeordnet.-₋Der Verdampfer 1 ist bei Erreichen des Füllstands L mit einem entsprechenden Volumen V des Wassers W gefüllt.

An einer umlaufenden Seitenwand 17 des Deckels 13 in der Nähe der oberseitigen Wand 15 befindet sich ein Dampfauslass 18. Der hier beispielhaft stutzenartig ausgebildete Dampfauslass 18 mag z.B. an einen Schlauch zum Führen des von dem Verdampfer erzeugten Dampfs in dem Speisenbehandlungsraum S des Haushalts-Dampfgargeräts H angeschlossen werden. Der Dampfauslass 18 ist oberhalb der unbeheizten Zone B2 angeordnet, damit von aufgewühltem Wasser W in der beheizten Zone B1 erzeugte kleine Wassertropfen nicht mit dem Dampfstrom mitgerissen werden. Dadurch erhöht sich die Dampfqualität. Je weniger Wassertröpfchen im Dampfstrom enthalten sind, desto höher ist sein Energiegehalt und somit die Effizienz. Des Weiteren wird verhindert, dass das Gargut bzw. die Speise in dem Speisebehandlungsraum S durch die Wassertröpfchen beschädigt wird.

**Fig.2** zeigt als Schnittdarstellung in Seitenansicht ein Haushalts-Dampfgargerät H mit dem Verdampfer 1 aus Fig.1. Das Haushalts-Dampfgargerät H weist einen Frischwasseranschluss 20 auf, welcher über eine als Befülleinrichtung dienende Befüllpumpe 21 mit der Wasserdurchlassöffnung 5 des Verdampfers 1 verbunden ist. Der Verdampfer 1 ist mit seiner Wasserdurchlassöffnung 5 ferner über eine als Entleereinrichtung dienende Ablaufpumpe 22 mit einem Abwasseranschluss 23 des Verdampfers 1 verbunden. Ein Betrieb der Befüllpumpe 21 und der Ablaufpumpe 22 wird über eine Steuereinrichtung 24 gesteuert. Die Steuereinrichtung 24 mag den Betrieb der Flächenheizung 9 des Verdampfers 1 steuern.

Die Steuereinrichtung 24 mag auch mit dem Füllstandssensor 16 verbunden sein, um z.B. die Befüllpumpe 21 und/oder die Flächenheizung 9 beruhend auf einem mittels des Füllstandssensors 16 abgefühlten Wert eines Füllstands L zu steuern.

Die Steuereinrichtung 24 mag z.B. eine zentrale Steuereinrichtung des Haushalts-Dampfgargeräts H sein, welche beispielsweise noch weitere Funktionen steuert, z.B. mindestens eine Heizeinrichtung (o. Abb.) zum Beheizen des Speisenbehandlungsraums S.

Die Wasserdurchlassöffnung 5 ist hier in Form zweier räumlich getrennter Wassereinlass- bzw. Wasserauslassöffnungen ausgebildet dargestellt, mag aber wie in Fig.1 eine gemeinsame Wasserdurchlassöffnung (d.h., eine kombinierte Wassereinlass- und Wasserauslassöffnung) sein.

Bei einem Betrieb des Verdampfers 1 zum Dampfbehandeln von Speisen wird über den Dampfauslass 18 des Verdampfers 1 Dampf in den ggf. aufgewärmten Speisenbehandlungsraum S des Haushalts-Dampfgargeräts H eingelassen. Dazu wird in einer Weiterbildung zunächst mittels der Befüllpumpe 21 Wasser in den Aufnahmeraum R eingepumpt, bis das Erreichen eines in Fig.3 beispielhaft gezeigten vorbestimmten Füllstands L festgestellt wird. Mit dem Erreichen des vorbestimmten Füllstands L wird die Befüllpumpe 21 sofort oder nach einem zeitlich definierten Nachlauf (z.B. zwischen 1 sec und 3 sec) gestoppt. Die dann aktivierte Flächenheizung 9 lässt das Wasser verdampfen, so dass der Wasserpegel sinkt. Mit Sinken des Wasserpegels unter den Füllstand L aktiviert die Steuereinrichtung 24 wieder die Befüllpumpe 21 zum Befüllen des Aufnahmeraums R mit Wasser usw. Typischerweise wird dabei pro Minute die Befüllpumpe 21 zweimal bis dreimal für jeweils fünf bis sieben Sekunden aktiviert. Der Aufbau des Verdampfers 1 ermöglicht eine besonders schnelle und verzögerungsfreie Verdampfung des eingefüllten Wassers, beispielsweise durch die großflächige Energieeinbringung mittels der Flächenheizung 9 und einen geringen vorbestimmten Füllstand L im Bereich von Millimetern, z.B. zwischen acht und zehn Millimetern, bevorzugt von neun Millimetern.

Wie weiter in **Fig.3** gezeigt, ragt von der oberseitigen Wand 15 des Deckels 13 innenseitig eine Trennwand 25 in den Aufnahmeraum R. Die Trennwand 25 ragt oberhalb des unbeheizten Bereichs B2 mit einem seitlichen Abstand von dem beheizten Bereich B1 vertikal nach unten in Richtung der Flächenheizung 9. Die Trennwand 25 lässt zu der Flächenheizung 9 einen Spalt, um einen Austausch von Wasser W zwischen einer durch die Trennwand 25 gebildeten Kammer 26 und dem restlichen Aufnahmeraum R zu gewährleisten. Die Kammer 26 befindet sich vollständig oberhalb des beheizten Bereichs B1 und wird auch von demjenigen Bereich der Seitenwand des Deckels 13 begrenzt, an dessen Außenseite sich der Füllstandssensor 16 befindet. Das in dieser Kammer 26 befindliche Wasser W stellt einen beruhigten Bereich des gesamten Volumens V dar.

Der Füllstandssensor 16 befindet sich somit (durch die Seitenwand 17 getrennt) an der Kammer 26 und damit auch an bzw. in der Nähe der unbeheizten Zone B2 oder dem beruhigten Bereich des Wassers W.

Der Füllstandssensor 16 weist hier eine Platine 30 auf, welche mit einer ersten Seite flächig auf der Seitenwand 17 aufliegt. An dieser ersten Seite ist die Platine 30 mit mehreren Messelementen in Form von Elektroden 31 belegt, welche z.B. als Platten oder Plattenbereiche eines Kondensators dienen können. An der dem Gehäuse 13 abgewandten zweiten Seite ist die Platine 30 mit einer Treiber- und/oder Auswerteschaltung 32 bestückt, z.B. einem Mikrokontroller

An der zweiten Seite ist auch ein Temperatursensor 33, z.B. ein NTC-Sensor, angeordnet, welcher die Temperatur der Platine 30 abfühlt. So können z.B. bei einer Signalauswertung temperaturabhängige Bauteileigenschaften des Füllstandssensors 16 und/oder eine Temperaturabhängigkeit der Permittivität des Wassers W berücksichtigt und zumindest teilweise kompensiert werden. Die Temperatur des Wassers W kann dabei z.B. durch eine Kennlinie, einen einfachen Offset usw. mit der Temperatur der Platine 30 korreliert werden.

Der Temperatursensor 33 mag auch mit der Steuereinrichtung 24 verbunden sein, so dass diese die Temperatur des Wassers W einstellen kann, z.B. um eine Reinigungs- und/oder Entkalkungsflüssigkeit in einem vorbestimmten Temperaturbereich halten zu können.

Zur Kommunikation des Füllstandssensors 16 mit einer anderen Komponente des Haushalts-Dampfgargeräts H, z.B. der Steuereinrichtung 24, mag an der Platine 30 eine Kommunikationsschnittstelle 34 aufweisen, z.B. einen Stecker oder eine Funkschnittstelle. So kann der Füllstandssensors 16 z.B. Füllstands- und/oder Temperaturwerte an die Steuereinrichtung 24 übertragen. Die Kommunikationsschnittstelle 34 ist in eine Aufnahmeaussparung 35 in dem Deckel 13 eingelassen und mag folglich auch als ein Halterungselement dienen.

Fig.3 zeigt auch genauer den Aufbau der Flächenheizung 9 sowie die Anordnung der Dichtung 12: Die Flächenheizung 9 weist oberseitig eine Trägerplatte 28 auf, welche die bodenseitige Wand des Aufnahmeraums R bildet und deren Vorderseite 9a in den Aufnahmeraum R weist. Die Trägerplatte 28 mag z.B. ein Stahlblechteil sein, dessen Vorderseite 9a beispielhaft blank oder verzundert ist. Die Trägerplatte 28 mag insbesondere eine Stärke zwischen einem und zwei Millimetern aufweisen, ist jedoch nicht darauf beschränkt. An einer Rückseite der Trägerplatte 28 befinden sich mehrere Dickschicht-Heizleiter 29, und zwar von der Trägerplatte 28 durch eine Isolierungsschicht (o. Abb.) getrennt. Die Dickschicht-Heizleiter 29 erstrecken sich nicht unter die unbeheizte Zone B2. Auch mag von unten eine Deckschicht (o. Abb.) auf die Dickschicht-Heizleiter 29 und ggf. die freiliegenden Bereiche der Isolierungsschicht aufgebracht sein. Eine solche Flächenheizung 9 mag insbesondere eine Stärke zwischen einem und zwei Millimetern aufweisen, ist jedoch nicht darauf beschränkt. Beispielsweise können zwei Dickschicht-Heizleiter 29 vorhanden sein, welche mit einer Nennleistung von 400 W bzw. 800 W einzeln oder zusammen betrieben werden können. Dabei mögen beide Dickschicht-Heizleiter 29 die beheizte Zone B1 praktisch ganzflächig erhitzen. Die beiden Dickschicht-Heizleiter 29 mögen dazu beispielsweise mäanderförmig ineinander verschlungen sein. Die Dichtung 12 ist als Doppeldichtung mit einem oberen Dichtungselement 12a und einem dazu gleichen unteren Dichtungselement 12b ausgestaltet. Die Dichtungselemente 12a und 12b verlaufen analog zu der Seitenkante 27. Das untere Dichtungselement 12b dichtet einen Spalt zwischen dem Bodenteil 2, speziell dessen Rand 4, und einer Rückseite der Trägerplatte 28 ab. Das obere Dichtungselement 12a dichtet einen Spalt zwischen der Vorderseite 9a der Trägerplatte 28 und dem Deckelteil 13 ab. Insbesondere das obere Dichtungselement 12a verhindert, dass Flüssigkeit aus dem Aufnahmeraum R zu dem Bodenteil 2 gelangen kann. Während also das Deckelteil 13, die Trägerplatte 28 und das obere Dichtungselement 12a mit der Flüssigkeit in Berührung kommen und daher lebensmittelecht ausgebildet sein sollten, braucht das Bodenteil 2 nicht lebensmittelecht ausgebildet zu sein. Das Bodenteil 2 mag insbesondere aus einem flammgeschützten Kunststoff bestehen, welcher eine höhere Elastizität aufweist als der lebensmittelechte Kunststoff des Deckelteils 13. Die Seitenkante 27 ist im Querschnitt konvex oder bombiert ausgebildet. Die beiden Dichtungselemente 12a und 12b der Dichtung 12 liegen auf der konvexen Seitenkante 27 auf. Durch die konvexe Form bilden das Deckelteil 13 und die Seitenkante 27 einen Haltebereich für das obere Dichtungselement 12a, wodurch das obere Dichtungselement 12a leicht gespannt gehalten werden kann.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Verdampfer
- 2: Bodenteil des Verdampfers
- 3: Bodenseitiger Bereich
- 4: Rand
- 5: Wasserdurchlassöffnung
- 6: Durchführungsöffnung
- 7: Rastlasche
- 8: Befestigungslasche
- 9: Flächenheizung
- 9a: Oberfläche der Flächenheizung
- 10: Elektrischer Anschluss
- 11: Loch
- 12: Dichtung
- 12a: oberes Dichtungselement
- 12b: unteres Dichtungselement
- 13: Deckelteil
- 14: Rastnase
- 15: Oberseitige Wand des Deckels
- 16: Kapazitiver Füllstandssensor
- 17: Seitenwand des Deckels
- 18: Dampfauslass
- 20: Frischwasseranschluss
- 21: Befüllpumpe
- 22: Ablaufpumpe
- 23: Abwasseranschluss
- 24: Steuereinrichtung
- 25: Trennwand
- 26: Kammer
- 27: Seitenkante der Flächenheizung
- 28: Trägerplatte
- 29: Dickschicht-Heizleiter
- 30: Platine
- 31: Elektrode
- 32: Auswerteeinrichtung
- 33: Temperatursensor
- 34: Kommunikationsschnittstelle
- 35: Aufnahmeaussparung
- A: Außenkontur
- B1: beheizte Zone der Flächenheizung
- B2: unbeheizte Zone der Flächenheizung
- H: Haushaltsdampfgerät
- L: Füllstand
- R: Aufnahmeraum
- S: Speisebehandlungsraum
- V: Volumen
- W: Wasser

## Patentansprüche

1. Verdampfer (1) für ein Haushalts-Speisenbehandlungsgerät (H), aufweisend
- einen Aufnahmeraum (R) für zu verdampfende Flüssigkeit (W) mit einer elektrischen Heizung (9) und
- einen Füllstandssensor (16) zum Bestimmen eines Füllstands (L) der Flüssigkeit (W) in dem Aufnahmeraum (R), der ein berührungslos arbeitender, ein elektromagnetisches Feld in dem Aufnahmeraum (R) erzeugender Sensor ist,
**dadurch gekennzeichnet, dass**
- der Füllstandssensor (16) an einer Außenseite einer den Aufnahmeraum (R) begrenzenden Gehäusewand (13) angeordnet ist und
- an dem Füllstandssensor (16) ein Temperatursensor (33) angeordnet ist.

2. Verdampfer (1) nach Anspruch 1, **dadurch gekennzeichnet, dass** der Füllstandssensor (16) ein kapazitiver oder ein induktiver Füllstandssensor ist.

3. Verdampfer (1) nach einem der vorhergehenden Ansprüche, **dadurch gekennzeichnet, dass**
- die elektrische Heizung eine Flächenheizung (9) ist, welche einen Boden des Aufnahmeraums (R) darstellt,
- die Flächenheizung (9) mindestens eine unbeheizte Zone (B2) aufweist und
- der Füllstandssensor (16) an der unbeheizten Zone (B2) angeordnet ist.

4. Verdampfer (1) nach einem der vorhergehenden Ansprüche, **dadurch gekennzeichnet, dass** der Temperatursensor (33) mit einer Auswerteeinrichtung (32) zum Auswerten von Sensorsignalen des Füllstandssensors (16) verbunden ist.

5. Verdampfer (1) nach einem der vorhergehenden Ansprüche, **dadurch gekennzeichnet, dass** der Temperatursensor (33) mit einer Temperatureinstelleinrichtung (24) zum Einstellen einer Temperatur der Flüssigkeit (W) und/oder der Flächenheizung (9) verbunden ist.

6. Verdampfer (1) nach einem der vorhergehenden Ansprüche, **dadurch gekennzeichnet, dass** der Füllstandssensor (16) eine Platine (30) aufweist, an deren der Gehäusewand (13) zugewandten Seite ein oder mehrere Messelemente (31) angeordnet sind.

7. Verdampfer (1) nach Anspruch 6, **dadurch gekennzeichnet, dass** an der der Gehäusewand (13) abgewandten Seite der Platine (30) eine elektronische Schaltung (32) zum Betrieb des Füllstandssensors (16) angeordnet ist.

8. Verdampfer (1) nach einem der vorhergehenden Ansprüche, **dadurch gekennzeichnet, dass** der Temperatursensor (33) an der Platine (30) angeordnet ist.

9. Verdampfer (1) nach den Ansprüchen 4 und 8, **dadurch gekennzeichnet, dass** an der der Gehäusewand (13) abgewandten Seite der Platine (30) die Auswerteeinrichtung in Form einer Auswerteschaltung (32) angeordnet ist.

10. Verdampfer (1) nach einem der vorhergehenden Ansprüche, **dadurch gekennzeichnet, dass** das Haushaltsgerät (H) ein Gargerät ist.

11. Haushalts-Speisenbehandlungsgerät (H), insbesondere Gargerät, aufweisend mindestens einen Verdampfer, **dadurch gekennzeichnet, dass** der Verdampfer ein Verdampfer (1) nach einem der vorhergehenden Ansprüche ist.

## Claims

1. An evaporator (1) for a household food handling appliance (H), having
- a receiving space (R) for liquid (W) to be evaporated which has an electrical heating unit (9) and
- a fill level sensor (16) for determining a fill level (L) of the liquid (W) in the receiving space (R), which is a sensor which operates in a contactless manner and generates an electromagnetic field in the receiving space (R),
**characterised in that**
- the fill level sensor (16) is arranged on an exterior face of a housing wall (13) which delimits the receiving space (R) and
- a temperature sensor (33) is arranged on the fill level sensor (16).

2. Evaporator (1) according to claim 1, **characterised in that** the fill level sensor (16) is a capacitative or inductive fill level sensor.

3. Evaporator (1) according to one of the preceding claims, **characterised in that**
- the electrical heating unit is a large-surface heating element (9), which represents a floor of the receiving space (R),
- the large-surface heating element (9) has at least one unheated zone (B2) and
- the fill level sensor (16) is arranged on the unheated zone (B2).

4. Evaporator (1) according to one of the preceding claims, **characterised in that** the temperature sensor (33) is connected with an evaluation device (32) for evaluating sensor signals of the fill level sensor (16) .

5. Evaporator (1) according to one of the preceding claims, **characterised in that** the temperature sensor (33) is connected with a temperature setting facility (24) for setting a temperature of the liquid (W) and/or the large-surface heating element (9).

6. Evaporator (1) according to one of the preceding claims, **characterised in that** the fill level sensor (16) has a circuit board (30), on the side facing the housing wall (13) of which one or more measuring elements (31) are arranged.

7. Evaporator (1) according to claim 6, **characterised in that** an electronic circuit (32) for operating the fill level sensor (16) is arranged on the side of the circuit board (30) which faces away from the housing wall (13).

8. Evaporator (1) according to one of the preceding claims, **characterised in that** the temperature sensor (33) is arranged on the circuit board (30).

9. Evaporator (1) according to claims 4 and 8, **characterised in that** the evaluation device in the form of an evaluation circuit (32) is arranged on the side of the circuit board (30) facing away from the housing wall (13).

10. Evaporator (1) according to one of the preceding claims, **characterised in that** the household appliance (H) is a cooking appliance.

11. Household food handling appliance (H), in particular cooking appliance, having at least one evaporator, **characterised in that** the evaporator is an evaporator (1) according to one of the preceding claims.

## Revendications

1. Évaporateur (1) pour un appareil électroménager de traitement d'aliments (H), comprenant
- un espace de collecte (R) pour un liquide à évaporer (W) à l'aide d'un chauffage électrique (9) et
- un détecteur de niveau de remplissage (16) pour déterminer le niveau de remplissage (L) du liquide (W) dans l'espace de collecte (R), lequel est un détecteur fonctionnant sans contact et produisant un champ électromagnétique dans l'espace de collecte (R), **caractérisé en ce que**
- le détecteur de niveau de remplissage (16) est situé sur le côté extérieur d'une paroi de contenant (13) délimitant l'espace de collecte (R) et
- un détecteur de température (33) est situé sur le détecteur de niveau de remplissage (16).

2. Évaporateur (1) selon la revendication 1, **caractérisé en ce que** le détecteur de niveau de remplissage (16) est un détecteur capacitif ou inductif du niveau de remplissage.

3. Évaporateur (1) selon l'une des revendications précédentes, **caractérisé en ce que**
- le chauffage électrique est une surface chauffante (9), qui est le plancher de l'espace de collecte (R),
- la surface chauffante (9) comprend au moins une zone non chauffée (B2) et
- le détecteur de niveau de remplissage (16) se trouve sur la zone non chauffée (B2).

4. Évaporateur (1) selon l'une des revendications précédentes, **caractérisé en ce que** le détecteur de température (33) est raccordé à un dispositif d'analyse (32) qui analyse les signaux de détection du détecteur de niveau de remplissage (16).

5. Évaporateur (1) selon l'une des revendications précédentes, **caractérisé en ce que** le détecteur de température (33) est raccordé à un dispositif de réglage de la température (24) qui règle la température du liquide (W) et/ou de la surface chauffante (9).

6. Évaporateur (1) selon l'une des revendications précédentes, **caractérisé en ce que** le détecteur de niveau de remplissage (16) comprend une platine (30) dont le côté face à la paroi de contenant (13) comprend un ou plusieurs éléments de mesure (31).

7. Évaporateur (1) selon la revendication 6, **caractérisé en ce que** le côté de la platine (30) tournant le dos à la paroi de contenant (13) comprend un circuit électronique (32) faisant fonctionner le détecteur de niveau de remplissage (16).

8. Évaporateur (1) selon l'une des revendications précédentes, **caractérisé en ce que** le détecteur de température (33) se trouve sur la platine (30).

9. Évaporateur (1) selon les revendications 4 et 8, **caractérisé en ce que**, sur le côté de la platine (30) qui tourne le dos à la paroi de contenant (13), le dispositif d'analyse est placé en tant que circuit d'analyse (32).

10. Évaporateur (1) selon l'une des revendications précédentes, **caractérisé en ce que** l'appareil électroménager (H) est un appareil de cuisson.

11. Appareil électroménager de traitement d'aliment (H), en particulier appareil de cuisson, comprenant au moins un évaporateur, **caractérisé en ce que** l'évaporateur est un évaporateur (1) selon l'une des revendications précédentes.
